# EUROPEAN PATENT APPLICATION

(11) **EP 4 197 403 A1**
(43) Date of publication of application: **21.06.2023**
(21) Application number: 21214628.6
(22) Date of filing: 15.12.2021
(51) Int. Cl.: A47J 31/06, A47J 31/46

(54) **COFFEE MACHINE**

(71) Applicant: Versuni Holding B.V., 5656 AE Eindhoven (NL)
(72) Inventor: BEEKMAN, Jarno, 5656 AE Eindhoven (NL)
(74) Representative: Vollering, Stefanus Franciscus Maria

(57) **Abstract**

This invention provides coffee machine having an externally fitted coffee vessel for receiving freshly ground coffee. A closing and/or tamping system is provided for closing the coffee vessel and/or compacting ground coffee in the coffee vessel by providing relative movement between the closing and/or tamping system, and the coffee vessel. The coffee vessel has a water entry port extending through a side wall for delivering heated water to the internal volume of the coffee vessel.

## Description

### FIELD OF THE INVENTION

This invention relates to coffee or espresso machines and in particular to a closing and/or tamping system and water delivery system for use in such machines.

### BACKGROUND OF THE INVENTION

It is well known that coffee made from freshly ground beans gives better quality than pre-ground coffee. Often, fresh beans are used when making espresso coffee.

There are many different types of commercially available espresso coffee machine, for use in the home, or in bars, restaurants and hotels. The type of machine which is appropriate in a particular setting for example depends on the amount of use, and the budget.

In a manual espresso machine, a user fills a coffee receiving vessel, known as a portafilter, with coffee grounds. The user then needs to tamp the coffee grounds within the portafilter with sufficient pressure, such as around 200N, to create a so-called puck. The portafilter is then mounted to the coffee machine, usually via a bayonet type of connection. Next, the coffee machine drives hot water through the puck in the portafilter and the resulting coffee is dispensed via a spout that is typically integrated in the portafilter. After brewing, the user needs to disconnect and empty the portafilter, throwing away the used coffee grounds.

In a bar setting, the manual process is conducted by a barista. In a domestic setting, the manual steps of the process may make the user feel more involved in the coffee making process, and hence may give the feeling of performing the role of a barista.

There are also manual espresso machines with an integrated grinder. A user switches the portafilter between a first position where it receives ground coffee and a second position where coffee is brewed. Tamping may be done manually or via a manually operated lever.

In a fully automatic espresso machine, all of the above-mentioned steps are done automatically, in one and the same machine. The machine comprises a bean reservoir and a grinder, to make the coffee grounds. These grounds are transported into a brew chamber and tamped automatically, via a piston that may be hydraulically actuated or actuated via an electromotor. Next, hot water is driven through the coffee grounds in the brew chamber, coffee is brewed and dispensed, and the used coffee grounds are discharged from the brew chamber into a waste bin within the machine.

This removes the manual steps required by a manual espresso machine and hence saves time, as well as ensures more uniform results.

A manual espresso machine can be produced at lower cost than a fully automatic espresso machine, since many of the transporting steps do not need to be automated. However, the results may be less uniform, as a result of the user involvement in the filling and tamping process, in particular the user involvement in setting the volume or weight of coffee grounds, and the force and uniformity (straightness) of tamping of the coffee grounds into a puck. A manual espresso machine needs less maintenance since the coffee puck is removed after every brew by the consumer as part of the brewing process.

A fully automatic machine gives more consistent results, but is more costly. It also removes the barista feel of using a manual espresso machine. The fully automatic coffee machine also needs more maintenance (filling of coffee beans, water filing, removing waste water and getting rid of the coffee waste in the waste bin). The fully automatic coffee machine may also be bigger.

A third type of coffee machine has been proposed, which combines elements from the two types described above. This is described in this document as a hybrid espresso machine.

For example, US 9 125 519 discloses a coffee machine with a removable portafilter as used in a manual espresso machine, but which also includes a bean reservoir and a coffee mill for delivering coffee powder to an inserted portafilter. The portafilter functions as the brewing chamber, and a distribution filter (forming a plunger) is used for automatically tamping and thereby compacting the coffee powder in the portafilter before pressurized hot water is delivered to the portafilter through that distribution filter.

This hybrid espresso machine thus combines elements from a manual espresso machine and a fully automatic espresso machine. In this type of machine, the user thus only needs to connect the empty portafilter to the machine. The grinding, dosing of the ground coffee in the portafilter, tamping of the ground coffee, hot water delivery and coffee dispensing is then automated as in a fully automatic machine. After brewing, the user needs to disconnect the portafilter and discharge the coffee waste, similarly to the way a manual espresso machine is used.

This invention relates generally to this hybrid type of espresso or coffee machine, namely with an external portafilter but with closing of the portafilter and tamping (if desired) implemented by the coffee machine, to give consistent results.

In the existing proposed designs, the provision of the water supply through the plunger, via the distribution filter, complicates the hydraulic connections in that a movable fluid connection is needed to the distribution filter, as it moves with the plunger. Furthermore, the distribution filter requires thorough cleaning because it has a number of holes which can become clogged with stuck coffee particles.

### SUMMARY OF THE INVENTION

The invention is defined by the claims.

Examples in accordance with an aspect of the invention provide a coffee machine, comprising:
a main housing having an exterior mounting port;
a water reservoir;
a water heater;
a water pump;
a coffee vessel for removable fitting to the exterior mounting port and adapted to receive freshly ground coffee;
a closing and/or tamping system for closing the coffee vessel and/or compacting ground coffee in the coffee vessel by providing relative movement between the closing and/or tamping system, and the coffee vessel;
wherein the coffee vessel comprises a base and a side wall defining an internal volume and an open top, wherein the coffee vessel comprises a water entry port extending through the side wall for delivering heated water to the internal volume of the coffee vessel.

This coffee machine provides the heated water directly to the coffee vessel (which creates the brew chamber, and hence functions as a portafilter) rather than via a distribution head which moves down over the coffee vessel. In this way, a more compact water delivery system is made possible with fewer moving fluid channels.

By removing the water distribution function from the closing and/or tamping system, it can have a smooth surface (instead of an array of distribution holes) which will stay clean, thereby reducing the cleaning effort of the user and limiting the amount of stale old coffee particles in the brewing area.

The coffee vessel is preferably for removable fitting to the exterior mounting port by a bayonet fitting. This is a well-known coupling design for attaching a coffee vessel, e.g. portafilter, to a coffee machine.

The main housing may comprise a water delivery port for delivering heated water to the coffee vessel, and the water delivery port is brought into fluid connection with the water entry port (of the coffee vessel) when the coffee vessel is fitted to the exterior mounting port.

Thus, the fitting of the coffee vessel, e.g. portafilter, automatically implements the required fluid connections to allow heated water to flow to the coffee vessel.

The closing and/or tamping system for example comprises a tamping piston.

The tamping piston may have an annular groove which communicates with the water entry port. The groove serves to distribute water around the coffee vessel and thus performs the function of a distribution head. The water entry port may then comprise a single opening at an inner face of the side wall. Thus, the water entry port may be a simple channel passing through the side wall of the coffee vessel. The annular groove in the tamping piston distributes the water.

There may instead be an annular groove around the inside of the coffee vessel (below the maximum insertion depth of the tamping piston).

In another design, the water entry port comprises a set of openings at an inner face of the side wall. In this way, a distributed arrangement of openings may be provided by a channel arrangement within the body of the coffee vessel.

The coffee machine for example comprises a hydraulic actuator, wherein the closing and/or tamping system is driven by the hydraulic actuator. The hydraulic actuator is for example for displacing the closing and/or tamping system up and down. Thus, the coffee vessel remains static which simplifies the fluid connections to the coffee vessel. Rigid fluid couplings may be used which engage with each other when the coffee vessel is attached to the coffee machine.

The closing and/or tamping system is for example actuatable between an upper position and a lower position, wherein the coffee machine comprises a chute for delivering coffee grounds to the coffee vessel via a space between the closing and/or tamping system and the coffee vessel when the closing and/or tamping system is in the upper position.

Thus, the coffee may be delivered to the coffee machine with the coffee vessel in place, thereby reducing the number of steps for the user. A coffee grinder may be provided for delivering coffee grinds to the chute. A bean reservoir may also be provided for delivering coffee beans to the coffee grinder.

The coffee machine for example comprises a controller, which is adapted to control at least one of:
the heating of water;
the grinding of coffee beans;
the dosing of ground coffee to the coffee vessel;
the displacement of the closing and/or tamping system relative to the coffee vessel; and
the delivery of hot water to the coffee vessel.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows the general design of a coffee machine to which various embodiments may be applied;
Figure 2 shows one example of a possible hydraulic circuit;
Figure 3 shows an example of the coffee vessel of the invention;
Figure 4 shows the use of the coffee vessel during delivery of coffee grinds; and
Figure 5 shows the use of the coffee vessel during delivery of heated water.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a coffee machine having an externally fitted coffee vessel (e.g. portafilter) for receiving freshly ground coffee. A closing and/or tamping system is provided for closing the coffee vessel and/or compacting ground coffee in the coffee vessel by providing relative movement between the closing and/or tamping system, and the coffee vessel. The coffee vessel has a water entry port extending through a side wall for delivering heated water to the internal volume of the coffee vessel.

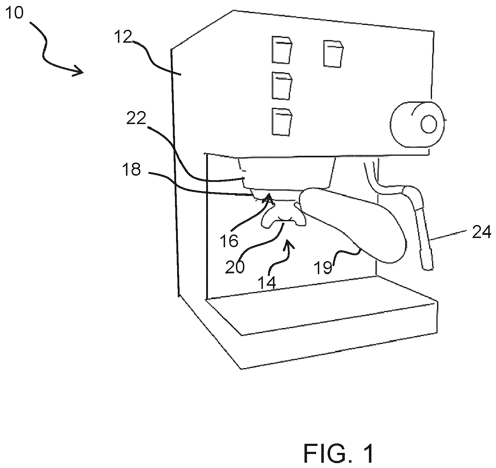

Figure 1 shows the general design of a coffee machine to which the invention may be applied. The invention relates in particular to a hybrid espresso coffee machine as explained above.

The coffee machine 10 comprises a main housing 12 having an exterior mounting port 14, for receiving a coffee vessel 16. The illustrated machine further comprises a steam nozzle 24.

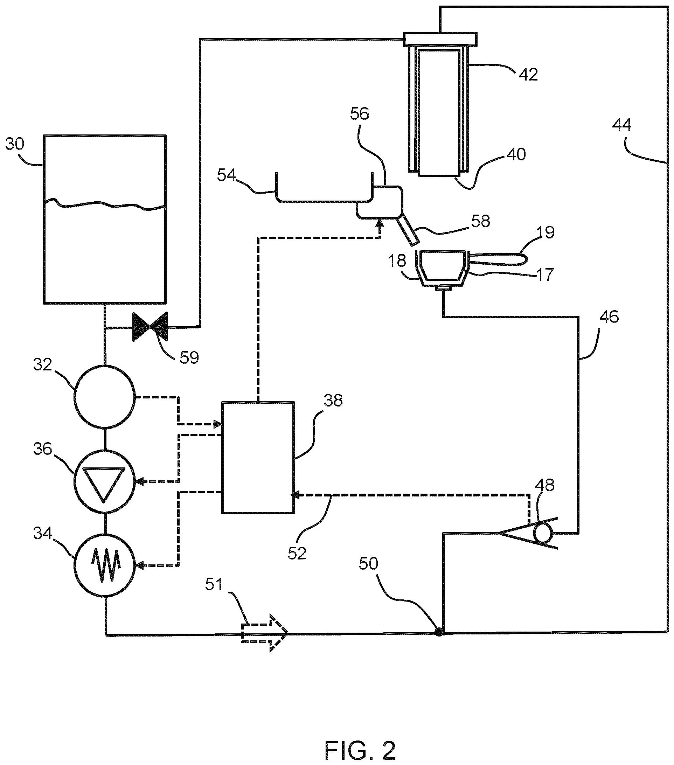

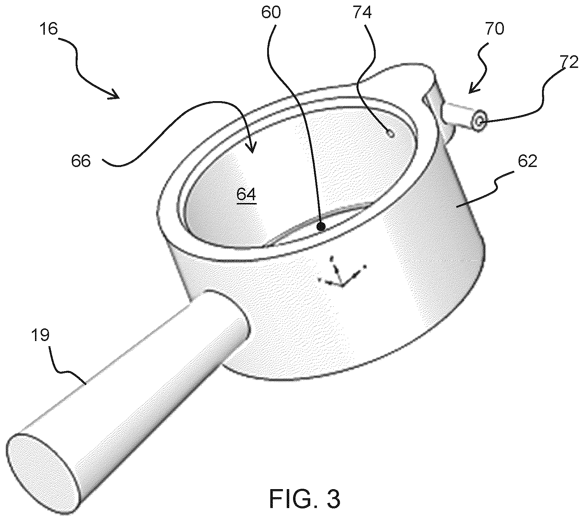

The coffee vessel 16 may comprise a filter or filter basket 17 (see Figs. 2 and 3). It may further include a support 18, for accommodating the filter or filter basket. The coffee vessel 16 may further comprise a lower spout 20 for dispensing brewed coffee, and there may be a crema valve in line with that lower spout. The coffee vessel has a handle 19 for assisting the attachment to the mounting port 14. The coffee vessel 16 may thus correspond to a conventional portafilter, as illustrated in the Figures. In use, the coffee vessel 16 is fitted to the exterior mounting port 14, for example via a bayonet type coupling.

The term "coffee vessel" in this description is used generally to denote a container which is filled with ground coffee and is subsequently closed to form a brew chamber in which the coffee is brewed.

In this hybrid type machine, the brew chamber may be considered to be at least partly external, because it is formed by an external, removable part. However, the ground coffee is delivered internally to the brew chamber. Discharging of the puck after brewing is performed externally, by a user.

The main housing 12 contains a hydraulic circuit which provides fluid couplings between a water supply (typically a water reservoir), an internal water heater and a water delivery system having a water delivery head for delivering heated water to the coffee vessel 16 (functioning as a brew chamber).

Figure 2 shows an example of a possible hydraulic circuit. Figure 2 shows an example of a hydraulic circuit with an internal grinder but an external coffee vessel, and thus is suitable for use in a hybrid type coffee machine.

It is noted that Figure 2 is adapted from PCT/EP2020/087481 to which reference is made for further details. In particular, alternative hydraulic circuits are disclosed in PCT/EP2020/087481 which may similarly be adapted, and which are only briefly summarized below.

Figure 2 shows a water reservoir 30, a flow meter 32 (for flow rate and dosing control), a water heater 34, a water pump 36 and a controller 38. The flow meter 32 may provide a flow measurement to controller 38, and the controller 38 may control the heater and pump to perform the coffee brewing process. The water heater may for instance be a flow through heater, e.g. a thermoblock. The flow meter 32 is optional. Dosing and flow rate control may alternatively be done via suitable control of the pump 36 (e.g. power level and pump time).

As will become clear from the description below, the coffee machine of the invention provides a fluid passage for delivering heated water directly to the coffee vessel rather than to a water delivery head forming part of the tamping system, as has previously been proposed and as is disclosed in PCT/EP2020/087481. In the known design, a water delivery head is used which comprises a water distribution disc. The water distribution disc provides an area of water delivery to the ground coffee.

A closing and tamping system is provided for compacting the ground coffee in the coffee vessel by providing relative movement between a tamping piston 40 and the coffee vessel 16. This relative displacement closes the coffee vessel to form a closed chamber, i.e. a brew chamber. It furthermore applies force to the ground coffee to perform tamping. The relative movement is achieved by moving the tamping piston 40.

The closing and tamping system includes a hydraulic actuator 42, comprising the piston 40 which is driven by hydraulic pressure. The hydraulic actuator may further comprise a return spring (not shown), to help retracting the piston after brewing.

A water outlet from the water pump 36 is coupled, via the heater 34, to the hydraulic actuator 42 by a first fluid coupling 44. The water outlet from the water pump is also coupled to the coffee vessel by a second fluid coupling 46. The second fluid coupling 46 includes a passive in-line valve 48. The passive in-line valve opens when the pressure at the inlet side of the hydraulic actuator (i.e. at branch point 50) reaches a desired pressure, e.g. a desired tamping pressure.

Below this pressure, the valve 48 stays closed. There may be hysteresis, so that the valve 48 opens at a first threshold pressure (an opening pressure), but only recloses when a lower second threshold pressure (a closing pressure) is reached. Alternatively, there may be only one threshold pressure.

In this way, the water pump 36 is used for both water delivery for brewing as well as water delivery for closing and tamping. The passive in-line valve 48 switches automatically between these two water delivery functions, without the need for user interaction or electrical actuators. The passive valve 48 opens for instance when a tamping pressure has been reached, i.e. when tamping has been completed. Water delivery then takes place to the coffee vessel via the open valve 48. During this water delivery to the coffee vessel, the tamping pressure is maintained.

In cases where no tamping of the coffee grounds is desired, the same system may be used to merely close the coffee vessel 16. In such case, the passive in-line valve 48 may open when a closing pressure has been reached.

It is also conceivable that closing of the coffee vessel is done via a different mechanism, e.g. manually. In such case, aforementioned system may be used to merely tamp the coffee grounds. The passive in-line valve 48 may then again open when a suitable tamping pressure has been reached, i.e. when tamping has been completed.

The passive valve 48 functions as a pressure controlled system in that it responds to the prevailing pressure. Thus, the closing and/or tamping is reliable and repeatable. By implementing pressure control, the desired closing and/or tamping pressure may be applied to any volume of coffee within the coffee vessel, which is not simple to achieve if position control is employed.

To drain water from the hydraulic actuator, a return path may be provided between the hydraulic actuator 42 and the water reservoir 30, as shown in Figure 2. To open or close the return path, a valve 59 may be provided. The valve 59 may for instance comprise an electronic shut-off valve. However, a lower cost alternative is a mechanical lock that may be actuated either by a separate handle, or by the action of attaching/ detaching the coffee vessel 16. More particularly, the valve 59 may be closed when the coffee vessel 16 is attached and opened when the coffee vessel is detached. Thus, opening and closing of the valve 59 may be controlled in response to or through a user attaching/detaching the coffee vessel.

In the example shown in Figure 2, the first and second fluid couplings 44, 46 meet at the branch point 50 downstream of the heater 34. Water is routed from the same branch point 50 either to the hydraulic actuator 42 or to the coffee vessel. To avoid the use of hot water for the closing and/or tamping process, the controller 38 may switch off the water heater 34 during actuation of the hydraulic actuator 42 and switch on the water heater during water delivery to the coffee vessel.

In a first possible modification to the hydraulic circuit of Figure 2, the first fluid coupling 44 may instead be between the water reservoir 30 (or more particularly, the water pump 36) and the hydraulic actuator 42 without passing the water heater 34, since hot water is not needed for driving the hydraulic actuator 42. The second fluid coupling 46 is however between the water reservoir 30 (or more particularly, the water pump 36) and the coffee vessel passing the water heater 34.

In a second possible modification to the hydraulic circuit of Figure 2, the first fluid coupling 44 may instead be between the water reservoir 30 and the hydraulic actuator 42 without passing the water heater 34, and includes the pump 36. The second fluid coupling 46 is then between the hydraulic actuator 42 and the coffee vessel and passes the water heater 34. Thus, the two fluid couplings are in series, with one on each side of the hydraulic actuator 42. The pump 36 is in the first fluid coupling 44 and the heater 34 is in the second fluid coupling 46. Cold water may again be used for closing and/or tamping and hot water may be used for brewing. The heating takes place between the hydraulic actuator and the coffee vessel. This avoids cooling of the water during the closing and/or tamping process and reduces energy usage.

More details of these alternatives are in PCT/EP2020/087481. Furthermore, the invention is not limited to this use of a passive in-line valve, and more conventional hydraulic circuits may be used with active valves separating the different flow paths in the system.

Figure 2 also show a bean reservoir 54 and a coffee grinder 56 having a ground coffee outlet 58. Figure 2 thus shows an internal coffee grinder and a brew chamber in the form of a coffee vessel 16 which is removably mounted to an external mounting port 14 and is emptied externally by the user as part of the normal operation of the coffee machine.

Figure 3 shows an example of the coffee vessel 16 used in the hydraulic circuit described above, in accordance with the invention. As described above, the coffee vessel is for removable fitting to the exterior mounting port and is adapted to receive freshly ground coffee.

The coffee vessel 16 comprises a base 60 and a side wall 62 together defining an internal volume 64 and an open top 66. The coffee vessel further comprises a water entry port 70 extending through the side wall 62 for delivering heated water to the internal volume 64 of the coffee vessel. In this way, water does not need to be delivered through the tamping piston 40, which can therefore have a smooth end face with no holes. This makes cleaning easier, and the coffee vessel is the part which has to be cleaned thoroughly. This is of course simple because it is removed from the coffee machine at each user and may for example be washed in a dishwasher.

The exterior mounting port has a water delivery port for delivering heated water to the coffee vessel. When the coffee vessel is fitted to the main housing, for example by a bayonet coupling as described above, the water delivery port (of the main housing, and forming part of the bayonet coupling) is brought into fluid connection with the water entry port 70.

Thus, the rotation of the coffee vessel to complete the bayonet coupling brings the water entry port and the water delivery port into alignment. A seal may be retained by the coffee vessel or the main housing, which is compressed when the bayonet coupling is complete.

The water entry port 70 has an external connection port 72 which couples to the water delivery port, and an internal opening 74 which leads to the internal volume 64.

In the example shown in Figure 3, the water entry port 70 has a single internal opening 74 at an inner face of the side wall 62 and a single connection port 72 at an outer face of the side wall.

However, as shown further below, the tamping piston may have an annular groove which communicates with the water entry port 70, in particular the internal opening 74, so that the water is spread around an annulus.

As an alternative, the water entry port 70 may comprise a set of openings at the inner face of the side wall but a single connection port at an outer face of the side wall. Thus, internally within the body of the coffee vessel, the single connection port at the outside of the coffee vessel may then branch into a set of internal openings to provide a more uniform delivery of water to the internal volume 64.

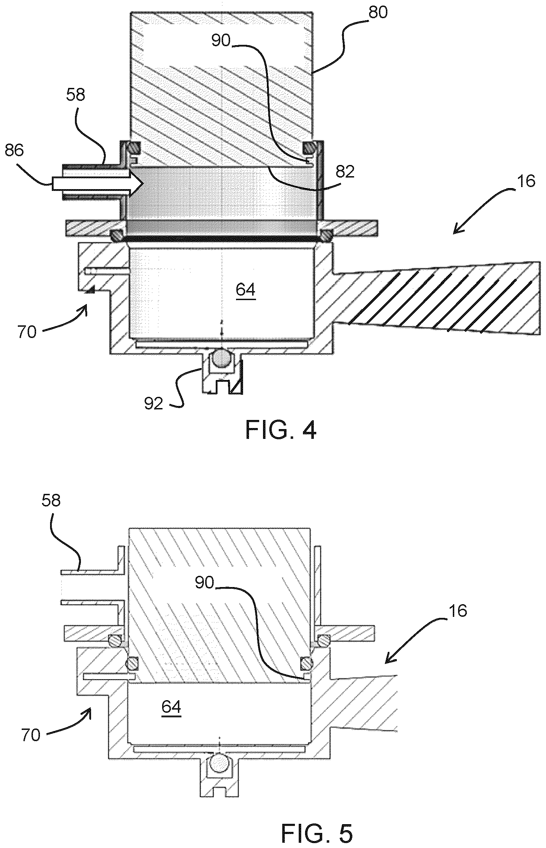

Figure 4 shows the coffee vessel 16 with the closing and/or tamping system, in particular a tamping piston 80 having a lower closing face 82 spaced above the open top of the coffee vessel.

Figure 4 shows an upper position of the tamping piston 80. The coffee machine comprises a chute 58 (as mentioned above) for delivering coffee grounds to the coffee vessel via the space between the lower closing face 82 and the coffee vessel, when in this upper position. The delivery of coffee grounds is represented by arrow 86. The chute 58 receives coffee from the coffee grinder 56, which in turn receives coffee beams from the bean reservoir 54. However, pre-ground coffee may instead be provided either via the chute or directly into the coffee vessel.

Figure 4 also shows the annular groove 90 around the bottom of the tamping piston 80. A crema valve 92 is at the outlet from the coffee vessel, through which brewed coffee is delivered.

The coffee dosing starts when the coffee vessel is attached to the main housing.

The closing and optionally also tamping then takes place as shown in Figure 5. The tamping piston 80 is moved to a lower position in which it closes the open top of the coffee vessel and if desired compacts the coffee grounds. The tamping piston thus moves down to tamp the coffee bed and form a watertight brewing chamber with the internal volume 64 of the coffee vessel.

The water used to brew the coffee is fed into and through the side wall of the coffee vessel. The water connection to the water entry port 70 is connected to the water supply of the coffee machine by the same movement that is used to lock the coffee vessel to the appliance.

In the example shown, the water is spread around the circumference of the coffee vessel by the annular groove 90 in the tamping piston 80. As explained above, water could also be injected from one or more internal openings in the side wall.

The example above makes use of a hydraulically actuated tamping piston. However, an electric actuator may be used or even a manual lever.

Different channel designs may be provided at the base of the tamping piston or around the side wall of the coffee vessel to provide a distribution function. However, in all cases the water is delivered to the internal volume 64 through a side wall of the coffee vessel rather than through the body of the tamping piston..

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A coffee machine, comprising:
a main housing (12) having an exterior mounting port (14);
a water reservoir (30);
a water heater (34);
a water pump (36);
a coffee vessel (16) for removable fitting to the exterior mounting port and adapted to receive freshly ground coffee;
a closing and/or tamping system (42) for closing the coffee vessel and/or compacting ground coffee in the coffee vessel by providing relative movement between the closing and/or tamping system and the coffee vessel;
wherein the coffee vessel comprises a base (60) and a side wall (62) defining an internal volume (64) and an open top (66), wherein the coffee vessel comprises a water entry port (70) extending through the side wall for delivering heated water to the internal volume (64) of the coffee vessel.

2. The coffee machine of claim 1, wherein the coffee vessel (16) is for removable fitting to the exterior mounting port (14) by a bayonet fitting.

3. The coffee machine of claim 1 or 2, wherein the main housing (12) comprises a water delivery port for delivering heated water to the coffee vessel and wherein the water delivery port is brought into fluid connection with the water entry port when the coffee vessel is fitted to the exterior mounting port.

4. The coffee machine of any one of claims 1 to 3, wherein the closing and/or tamping system comprises a tamping piston.

5. The coffee machine of claim 4, wherein the tamping piston has an annular groove which communicates with the water entry port.

6. The coffee machine of any one of claims 1 to 5, wherein the water entry port comprises a single opening at an inner face of the side wall

7. The coffee machine of any one of claims 1 to 5, wherein the water entry port comprises a set of openings at an inner face of the side wall

8. The coffee machine of any one of claims 1 to 7, wherein the water entry port comprises a single connection port at an outer face of the side wall.

9. The coffee machine of any one of claims 1 to 8, comprising a hydraulic actuator (42), wherein the closing and/or tamping system is driven by the hydraulic actuator (42).

10. The coffee machine of claim 9, wherein the hydraulic actuator is for displacing the closing and/or tamping system up and down.

11. The coffee machine of any one of claims 1 to 10, wherein the closing and/or tamping system is actuatable between an upper position and a lower position, wherein the coffee machine comprises a chute for delivering coffee grounds to the coffee vessel via a space between the closing and/or tamping system and the coffee vessel when the closing and/or tamping system is in the upper position.

12. The coffee machine of any one of claims 1 to 11, further comprising a coffee grinder.

13. The coffee machine of any one of claims 1 to 12, further comprising a bean reservoir (54).

14. A coffee machine as claimed in any one of claims 1 to 13, comprising a controller (38), which is adapted to control at least one of:
heating of water;
grinding of coffee beans;
dosing of ground coffee to the coffee vessel;
displacement of the closing and/or tamping system relative to the coffee vessel; and
delivery of hot water to the coffee vessel.
